# EUROPÄISCHE PATENTSCHRIFT

(11) **EP 3 577 549 B1**
(45) Veröffentlichungstag und Bekanntmachung des Hinweises auf die Patenterteilung: **05.07.2023**
(21) Anmeldenummer: 18702612.5
(22) Anmeldetag: 25.01.2018
(51) Int. Cl.: G06F 3/06, G06F 12/14, G06K 19/077

(54) **STECKBARER DATENSPEICHER MIT UNABHÄNGIGEN DATENSPEICHERELEMENTEN UND SYSTEM AUS EINEM STECKBAREN DATENSPEICHER UND MINDESTENS ZWEI SYSTEMKOMPONENTEN**
PLUG-IN DATA STORE HAVING INDEPENDENT DATA STORE ELEMENTS, AND SYSTEM OF A PLUG-IN DATA STORE AND AT LEAST TWO SYSTEM COMPONENTS
MÉMOIRE DE DONNÉES ENFICHABLE POURVUE D'ÉLÉMENTS DE MÉMORISATION DE DONNÉES INDÉPENDANTS ET SYSTÈME COMPOSÉ D'UNE MÉMOIRE DE DONNÉES ENFICHABLE ET D'AU MOINS DEUX COMPOSANTS DE SYSTÈME

(30) Priorität: 06.02.2017 DE 102017001022
(43) Veröffentlichungstag der Anmeldung: 11.12.2019
(73) Patentinhaber: SEW-EURODRIVE GmbH & Co. KG, 76646 Bruchsal (DE)
(72) Erfinder: SENFT, Christian, 76228 Karlsruhe-Grünwettersbach (DE); HOFFMANN, Philipp, 76863 Herxheim (DE); HEIL, Manuel, 76344 Eggenstein-Leopoldshafen (DE); HERBOLD, Marcus, 76646 Bruchsal (DE); RICHTER, Sebastian, 69120 Heidelberg (DE)
(74) Vertreter: Tüngler, Eberhard
(86) Internationale Anmeldenummer: PCT/EP2018/025020
(87) Internationale Veröffentlichungsnummer: WO 2018/141484

(56) Entgegenhaltungen:
- US-A1- 2014 372 653
- US-A1- 2015 134 893

## Beschreibung

Die Erfindung betrifft einen steckbaren Datenspeicher mit unabhängigen Datenspeicherelementen und ein System aus einem steckbaren Datenspeicher und mindestens zwei Systemkomponenten, die für den Betrieb je ein steckbares Datenspeicherelement benötigen.

Als Stand der Technik sind steckbare Datenspeicher wie beispielsweise USB-Sticks und SD-Karten bekannt. Diese werden vornehmlich zum komfortablen Austausch und Transport von Informationsdaten verwendet. Bezogen auf industrielle Anwendungen wird auf steckbare Datenspeicher vor allem Identifikations- und/oder Konfigurationsdaten von Systemkomponenten einer Anlage gespeichert.

Ein typischer steckbarer Datenspeicher umfasst dabei ein Gehäuse mit nur einem Datenspeicherelement und nur einer Schnittstelle. Unter Gehäuse ist hierbei eine Schutzhülle zu verstehen, die das Datenspeicherelement vor Umwelteinflüssen und damit vor Beschädigung sowohl beim Transport als auch im gesteckten Zustand in einer Systemkomponente bewahrt. Als Datenspeicherelement ist hier ein elektronisches Bauelement gemeint, welches Informationsdaten nichtflüchtig aufbewahren kann. Dies geschieht typischerweise in Form von Transistorschaltzuständen. Unter nichtflüchtig ist hierbei zu verstehen, dass die gespeicherten Informationsdaten auch dann noch im Datenspeicherelement verbleiben, wenn dieses über einen längeren Zeitraum nicht mit Energie versorgt wird.

Die Schnittstelle des steckbaren Datenspeichers hat dabei die Aufgabe, einen Zugangspunkt für eine Systemkomponente auf das Datenspeicherelement zur Verfügung zu stellen. Der Zugriff erfolgt dabei nur leitungsgebunden, d.h. eine elektrische Verbindung wird ausschließlich über Leiterbahnen und über Kontakte von Steckverbinder-Elementen bzw. Gegensteckverbinder-Elementen realisiert. Durch diese exklusive Punkt-zu-Punkt-Verbindung ist die gegenseitige Beeinflussung mehrerer Systemkomponenten während des Zugriffs auf das Datenspeicherelement reduzierbar.

Industrielle Anlagen weisen meist mehrere Systemkomponenten auf, die miteinander vernetzt bzw. verschaltet sind. Unter Systemkomponenten sind hier abgeschlossene Baugruppen zu verstehen, die eine bestimmte Funktionalität erfüllen. Typischerweise benötigt jede dieser Systemkomponenten einen externen Datenspeicher. Unter externem Datenspeicher ist hierbei ein Element zu verstehen, welches sich räumlich außerhalb des Gehäuses einer Systemkomponente befindet und somit unabhängig von der Systemkomponente selbst angeordnet ist. Damit ist es einerseits möglich, dass Konfigurationsdaten schon vor der endgültigen Inbetriebnahme einer Anlage vorbereitet und auf das Datenspeicherelement des externen Datenspeichers übertragen werden können. Andererseits lassen sich bei einem Ausfall bzw. Defektes einer Systemkomponente die Konfigurationsdaten einfach auf eine neue Systemkomponente übertragen, indem der alte externe Datenspeicher mit der neuen Systemkomponente verbunden wird. Als Beispiel sei ein elektronisches Antriebssystem erwähnt, bei dem sowohl ein Umrichter als auch eine Sicherheitssteuerung mit je einem externen Datenspeicher ausgestattet sind. Dabei umfasst das externe Datenspeicherelement des Umrichters exklusiv die Identifikations- und/oder Konfigurationsinformationen des Umrichters und das externe Datenspeicherelement der Sicherheitssteuerung exklusiv die Identifikations- und/oder Konfigurationsinformationen der Sicherheitssteuerung. Der Umrichter regelt bzw. steuert hierbei einen Elektromotor, während die Sicherheitssteuerung die Anlage auf Fehlerfreiheit überwacht und bei Bedarf Funktionen des Umrichters sicherheitsgerichtet beeinflussen kann.

Ein Problem ist jedoch, dass mit steigender Komplexität heutiger industrieller Anlagen auch gleichzeitig der Bedarf an steckbaren Datenspeicher wächst. Dies verursacht einerseits einen hohen Logistikaufwand beim Endanwender und kann andererseits während der Inbetriebnahme und/oder im Wartungsfall leicht zu Komplikationen führen, insbesondere da mehrere meist proprietäre Speicherlösungen gehandhabt werden müssen.

Aus der US 2014/372653 A1 ist als nächstliegender Stand der Technik ein steckbarer Datenspeicher bekannt.

Der Erfindung liegt daher die Aufgabe zu Grunde die Anzahl unterschiedlicher steckbarer Datenspeicher in einer Industrieanlage zu reduzieren.

Erfindungsgemäß wird die Aufgabe nach den in Anspruch 1 angegebenen Merkmalen gelöst.

Ein wichtiges Merkmal der Erfindung ist, dass das Gehäuse des steckbaren Datenspeichers mindestens ein weiteres, nichtflüchtiges Datenspeicherelement und eine weitere leitungsgebundene Schnittstelle umfasst. Dabei werden die Datenspeicherelemente unabhängig voneinander und physikalisch getrennt ausgeführt. Auch die Schnittstellen sind unabhängig voneinander aufgebaut. Unter unabhängig voneinander ist dabei zu verstehen, dass der Betriebszustand des einen Datenspeicherelements bzw. der einen Schnittstelle keinen Einfluss auf den Betriebszustand des anderen Datenspeicherelements bzw. der anderen Schnittstelle hat. Unter physikalisch getrennt ist hierbei die Ausführung als separate Bauelemente zu verstehen.

Vorteilhafterweise bleibt hierdurch die funktionale Trennung der Datenspeicherelemente erhalten, sodass sich der steckbare Datenspeicher für die Gegenstellen wie zwei separate Datenspeicher verhält und damit keine Rückwirkung auf die Anwendung hat. Zusätzlich ergibt sich eine Vereinfachung bei einem Komponententausch, da nur ein Datenspeicher auf die neue Systemkomponente bzw. Baugruppe übertragen werden muss. Außerdem lassen sich Herstellungs- und Lagerkosten reduzieren, da nur ein Datenspeicher gefertigt und auf Lager gelegt werden muss.

Erfindungsgemäß wird die Anzahl unterschiedlicher steckbarer Datenspeicher in einer Industrieanlage reduziert, wobei gleichzeitig der Platzbedarf am Gehäuse einer Systemkomponente sowie die Lagerhaltungskosten einsparbar sind und überdies ein Systemkomponententausch einfacher ausführbar ist.

Unterschiedliche Anwendungen stellen unterschiedliche Anforderungen an das Speichermanagement. Erfindungsgemäß ist bei funktional-sicheren Anwendungen zwingend erforderlich, dass Standard-Anwendungen keinen Zugriff auf den funktional-sicheren Speicherbereich haben.

Unter funktional-sicher ist dabei zu verstehen, dass ein einzelner zufälliger oder systematischer Fehler in einer Anlage nicht oder nur mit einer sehr geringen Wahrscheinlichkeit dazu führt, dass die Anwendung gefährlich ausfällt und somit zur Verletzung oder dem Tod von Menschen, der Verschmutzung der Umwelt und/oder dem Verlust einer Anlage oder Produktion führt. Daher werden hohe Anforderungen an die Ausführung und den Aufbau einer funktional-sicheren Systemkomponente gestellt.

Verwendet einer funktional-sicheren Systemkomponente einen externen Datenspeicher, so lassen sich in der Regel die Anforderungen an das Speichermanagement am einfachsten einhalten, wenn dieser Datenspeicher auch vollständig von der Standard-Anwendung getrennt ausgeführt ist.

In der vorliegenden Erfindung wird die Aufgabe dadurch gelöst, dass mehrere unabhängige und steckbare Datenspeicher in ein gemeinsames Gehäuse integriert werden, wobei die Unabhängigkeit jedes einzelnen Datenspeichers erhalten bleibt. Dabei können mehrere Systemkomponenten gleichzeitig auf jeweils ein exklusiv zugeordnetes Datenspeicherelement des gemeinsam verwendeten steckbaren Datenspeichers zugreifen, ohne sich gegenseitig zu beeinflussen. Damit ist einerseits der Platzbedarf, der für die elektrisch leitende Kontaktierung mit den Datenspeicherelementen benötigt wird, reduzierbar. Andererseits lassen sind dadurch die Lagerhaltungskosten minimieren, da nur ein einziger gemeinsamer steckbarer Datenspeicher Verwendung findet. Im Falle des Austauschs einer Systemkomponente muss daher höchstens ein steckbarer Datenspeicher auf die neue Systemkomponente übertragen werden, wodurch sich der Tauschvorgang vereinfacht und sich die Fehleranfälligkeit beim Tausch und damit einhergehend die Stillstandszeit der Anlage reduzieren lässt.

Erfindungsgemäß werden die Schnittstelle und die weitere Schnittstelle über ein gemeinsames Steckverbinder-Element geführt. Ein Steckverbinder-Element ist hierbei ein zweiteiliges mechanisches Bauteil, bestehend aus Steckverbinder und Gegensteckverbinder, das mehrere Kontaktstellen bietet, um eine trennbare elektrische Verbindung zwischen zwei Komponenten herzustellen. Vorteilhafterweise lässt sich damit der Platzbedarf reduzieren, da anstelle von zwei separaten Steckplätzen nur ein Steckplatz für die Adaptierung benötigt wird.

Erfindungsgemäß werden die Schnittstelle und die weitere Schnittstelle über je ein Steckverbinder-Element geführt. Vorteilhafterweise lässt sich damit ein einzelner Datenspeicher gleichzeitig mit mehreren Systemkomponenten verbinden.

Bei einer weiteren vorteilhaften Ausgestaltung sind das Datenspeicherelement und das weitere Datenspeicherelement in unterschiedlichen Technologien und/oder mit unterschiedlichen Zugriffsverfahren ausgeführt. Unter Technologien ist hierbei das technische Verfahren, mit dem die Daten gespeichert werden, zu Verstehen. Für die jeweilige Anwendung unterscheiden sich diese Verfahren in der speicherbaren Datenmenge, der Zugriffsgeschwindigkeit und den Kosten des Bauteils. Mit dem Zugriffsverfahren ist die Art und Weise gemeint wie eine Systemkomponente die Informationen des Datenspeichers lesen bzw. schreiben kann. Für die jeweilige Anwendung unterscheiden sich die Verfahren in Robustheit gegenüber Störungen und in der maximalen Länge der Übertragungsstrecke. Vorteilhafterweise lassen sich damit die Datenspeicherelemente unabhängig voneinander an die Anforderungen der jeweiligen Applikation anpassen.

Erfindungsgemäß sind das Datenspeicherelement und die Schnittstelle galvanisch getrennt vom weiteren Datenspeicherelement und der weiteren Schnittstelle ausgeführt. Unter galvanisch getrennt ist hierbei zu verstehen, dass zwischen zwei Schaltkreisen keine elektrische Verbindung besteht und somit auch beide Schaltkreis aus unterschiedlichen Quellen mit Energie versorgt werden können. Vorteilhafterweise ist der gemeinsame steckbare Datenspeicher somit auch von Systemkomponenten mit unterschiedlichen Bezugspotenzialen verwendbar.

Ein wichtiges Merkmal bei dem System bestehend aus steckbarem Datenspeicher und mindestens zwei Systemkomponenten, die für den Betrieb je ein steckbares Datenspeicherelement benötigen ist, dass jedes dieser benötigten Datenspeicherelemente in einem gemeinsamen Gehäuse eines steckbaren Datenspeichers zusammengefasst ist und überdies jede Systemkomponente über eine separate und leitungsgebundene Schnittstelle auf genau ein Datenspeicherelement exklusiv Zugriff hat. Unter exklusivem Zugriff wird hierbei verstanden, dass ein bestimmtes Datenspeicherelement von nur einer einzigen definierten Quelle gelesen bzw. geschrieben werden kann.

Vorteilhafterweise wird hiermit eine funktionale Trennung der Datenspeicherelemente erreicht, sodass beide Systemkomponenten unabhängig voneinander ein Speichermanagement ausführen können. Zusätzlich können beide Systemkomponenten unabhängig voneinander entwickelt werden. Ebenso ist eine getrennte Speicherung von konventionellen und funktional-sicheren Daten auf dem gemeinsamen Datenspeicher realisierbar.

Bei einer weiteren vorteilhaften Ausgestaltung des Systems wird der gemeinsame steckbare Datenspeicher genau an der räumlichen Grenze der Systemkomponenten angeordnet, sodass die Schnittstelle mit der ersten Systemkomponente und die weitere Schnittstelle mit der weiteren Systemkomponente elektrisch leitend verbunden sind. Eine räumliche Grenze ergibt sich hierbei, wenn Systemkomponenten räumlich unmittelbar nebeneinander angeordnet sind. Als Beispiel sei hier ein Umrichter mit Sicherheitssteuerung als Einsteckkarte aufgeführt. Vorteilhafterweise ergeben sich in dieser Ausgestaltung kurze Übertragungstrecken zwischen dem jeweiligen Datenspeicherelement und dem Mikrocontroller bzw. der Regelungs- und/oder Steuerungseinheit der Systemkomponente. Dadurch ist diese Ausgestaltung besonders geeignet, wenn beide Systemkomponenten eine hohe Datenmenge speichern müssen.

Bei einer weiteren vorteilhaften Ausgestaltung des Systems ist der gemeinsame steckbare Datenspeicher nur mit einer der Systemkomponenten physikalisch verbunden. Dabei hat die verbundene Systemkomponente nur Zugriff auf die Daten des einen Datenspeicherelements. Der Zugriff auf die weiteren Daten des weiteren Datenspeicherelements erfolgt nur über die weitere Systemkomponente und wird über die Systemkomponente unverfälscht weitergeleitet. Unter unverfälschter Weiterleitung ist hierbei zu verstehen, dass die Daten nur über Leiterbahnen und Steckverbinder-Elemente, ohne eine Aufbereitung mittels Logikbausteinen, Mikrocontrollern und/oder FPGAs, übertragen werden. Vorteilhafterweise reduziert sich damit der Platzbedarf da nur ein Steckverbinder-Element für die Kontaktierung des steckbaren Datenspeichers notwendig ist. Die Ausgestaltung ist besonders geeignet, wenn die Systemkomponente, die den Zugriff weitergeleitet bekommt, nur eine geringe Menge an Daten speichern muss und hierfür auch ausreichend Zeit zur Verfügung hat.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßer steckbarer Datenspeicher dargestellt.
In der Figur 2 ist eine beispielhafte Implementierung eines Systems bestehend aus dem erfindungsgemäßen steckbaren Datenspeichers und zwei Systemkomponenten abgebildet.
In der Figur 3 ist ein weiteres Ausführungsbeispiel eines erfindungsgemäßen steckbaren Datenspeichers in Kombination mit zwei Systemkomponenten gezeigt.

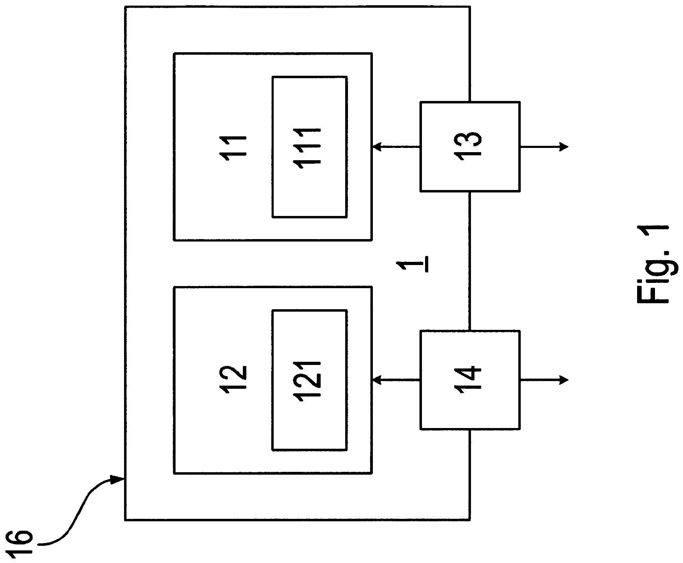

Wie in Figur 1 gezeigt, umfasst der steckbare Datenspeicher ein erstes nichtflüchtiges Datenspeicherelement und mindestens ein weiteres nichtflüchtiges Datenspeicherelement. Dabei sind diese Datenspeicherelemente unabhängig voneinander, idealerweise als zwei getrennte Bauteile, ausgeführt. Beide Datenspeicher enthalten Informationsdaten. Ein elektronischer Lese- bzw. Schreibzugriff auf die Informationsdaten des ersten Datenspeicherelements ist nur exklusiv über die erste Schnittstelle möglich. Ebenso ist ein elektronischer Lese- bzw. Schreibzugriff auf die Informationsdaten des weiteren Datenspeicherelements ausschließlich über die weitere Schnittstelle herstellbar. Dies wird beispielsweise dadurch erreicht, indem sowohl die Schnittstellen als auch die Datenspeicherelemente galvanisch getrennt voneinander aufgebaut sind. Damit wird ermöglicht, dass gleichzeitig, mit unterschiedlicher Datenrate und mit unterschiedlichen Übertragungsverfahren auf die Informationsdaten beider Datenspeicherelemente des steckbaren Datenspeichers zugegriffen werden kann. Idealerweise sind die Datenspeicherelemente auf einer gemeinsamen Leiterplatte angeordnet. Vorteilhafterweise befinden sich die Datenspeicherelemente auch auf einer gemeinsamen Seite der Leiterplatte. Vorteilhafterweise ist die Leiterplatte auch als einlagige Leiterplatte ausgeführt. Mit diesen Maßnahmen lässt sich der Produktionsprozess bei der Herstellung des erfindungsgemäßen steckbaren Datenspeichers mit unabhängigen Datenspeicherelementen vereinfachen und somit Herstellungskosten einsparen. Zum Schutz vor Umwelteinflüssen werden mindestens das nichtflüchtige Datenspeicherelement und das weitere nichtflüchtige Datenspeicherelement von einem gemeinsamen Gehäuse, typischerweise aus einem in kostengünstiger Spritzgusstechnik hergestellten Gehäuse auf Kunststoffbasis, umgeben. Durch das Zusammenfassen der sonst üblicherweise verwendeten einzelnen steckbaren Datenspeicher mit jeweils nur einem Datenspeicherelement in einen gemeinsamen steckbaren Datenspeicher mit mehreren unabhängigen Datenspeicherelementen wird somit die Handhabung bei einem Komponententausch vereinfacht, die Fehleranfälligkeit beim Tausch verringert und damit einhergehend die Stillstandszeit der Anlage deutlich reduziert. Überdies sind auch die Lagerhaltungskosten minimierbar, da nur ein einziger steckbarer Datenspeicher auf Lager vorrätig sein muss.

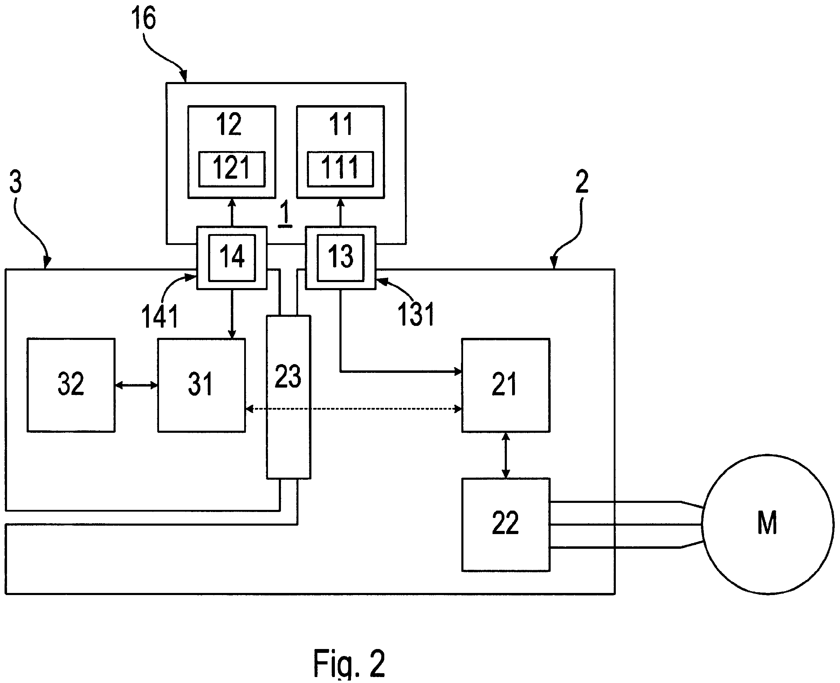

In der Figur 2 ist eine beispielhafte Implementierung eines Systems bestehend aus dem erfindungsgemäßen steckbaren Datenspeichers, einem Umrichter mit verbundener Sicherheitssteuerung und einem Elektromotor abgebildet.

Der steckbare Datenspeicher ist über ein separates Steckverbinder-Element mit dem Umrichter und über ein weiteres separates Steckverbinder-Element mit der Sicherheitssteuerung verbunden.

Der Umrichter umfasst dabei eine Steuerelektronik und eine Leistungselektronik. Dabei erzeugt die Steuerelektronik die zur Bewegung des Elektromotors notwendigen Signalmuster, während die Leistungselektronik diese Signalmuster auf die für den Elektromotor notwendigen Hochspannungssignalpegel, typischerweise 230 V AC, umsetzt. Unterschiedliche Elektromotoren haben dabei unterschiedliche Ansteuerungsparameter. Diese Parameter müssen in einem externen Datenspeicherelement gespeichert werden, um nach Komponenten-tausch sofort für den neuen Umrichter zur Verfügung zu stehen. Hierzu ist die Steuerelektronik derart ausgebildet, dass diese über die erste Schnittstelle des separaten Steckverbinder-Elements Zugriff auf die Daten des ersten Datenspeicherelements des steckbaren Datenspeichers hat.

Die Sicherheitssteuerung ist über ein weiteres Steckverbinder-Element mit dem Umrichter verbunden und umfasst typischerweise zwei Mikrocontroller, die sich gegenseitig und über diverse und in Figur 2 nicht dargestellte Sensoren die Funktion des Systems überwachen. Erkennt die Sicherheitssteuerung einen Fehler, so kann diese über die Verbindung zum Umrichter in dessen Funktion eingreifen und beispielhaft den Elektromotor drehmomentfrei schalten. Die Überwachungsfunktionen sind spezifisch für jedes System parametrierbar. Daher müssen diese Parameter auch in einem externen Datenspeicherelement gespeichert werden, um nach einem Komponententausch sofort für die neue Sicherheitssteuerung zur Verfügung zu stehen. Hierzu ist die Sicherheitssteuerung derart ausgebildet, dass ein Mikrocontroller über die weitere Schnittstelle des weiteren separaten Steckverbinder-Elements Zugriff auf die Daten des weiteren Datenspeicherelements des steckbaren Datenspeichers hat.

Dadurch, dass die beiden Datenspeicherelemente unabhängig voneinander ausgeführt sind, können auch der Umrichter und die Sicherheitssteuerung gleichzeitig, ohne gegenseitige Beeinflussung auf den externen Datenspeicher zugreifen.

Vorteilhafterweise ist somit auch eine unabhängige Entwicklung von Umrichter und Sicherheitssteuerung möglich. Die Unabhängigkeit ist auch Voraussetzung, dass funktional-sichere und nicht sichere Daten auf einem gemeinsamen steckbaren Datenspeicher gespeichert werden dürfen, da funktional-sichere Anwendungen eine erhöhte Anforderung an das Speichermanagement stellen.

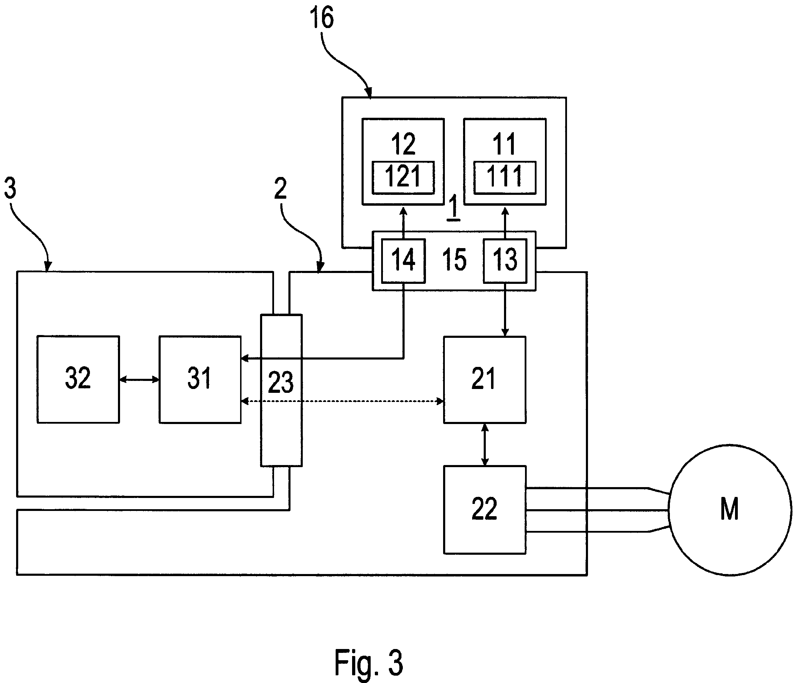

Figur 3 zeigt ein weiteres Ausführungsbeispiel eines erfindungsgemäßen steckbaren Datenspeichers in Kombination mit einer Sicherheitssteuerung, einem Umrichter und einem Elektromotor.

Der steckbare Datenspeicher ist nur über ein einziges gemeinsames Steckverbinder-Element mit dem Umrichter verbunden. Die erste Schnittstelle zum ersten Datenspeicherelement und die weitere Schnittstelle zum weiteren Datenspeicherelement sind beide unabhängig voneinander über das gemeinsame Steckverbinder-Element geführt.

Der Umrichter ist derart ausgebildet, dass die Steuerelektronik über die erste Schnittstelle des ersten Steckverbinder-Elements Zugriff auf die Daten des ersten Datenspeicherelements des steckbaren Datenspeichers hat. Zusätzlich wird die weitere Schnittstelle des gemeinsamen Steckverbinder-Elements unverfälscht an ein weiteres Steckverbinder-Element weitergeleitet.

Die Sicherheitssteuerung ist über das weitere Steckverbinder-Element mit dem Umrichter verbunden und derart ausgebildet, dass ein Mikrocontroller über die weitere Schnittstelle Zugriff auf die Daten des weiteren Datenspeicherelements des steckbaren Datenspeichers hat.

Ein weiterer Vorteil dieser Ausgestaltung ist die Verwendung von nur einem Steckverbinder-Element zur Kontaktierung des steckbaren Datenspeichers. Damit lässt sich der Platzbedarf bei der Kontaktierung im Vergleich zur Verwendung von zwei separaten Datenspeichern optimieren.

Die Erfindung bezieht sich also auf die Weiterentwicklung eines steckbaren Datenspeichers für Systemkomponenten einer Industrieanlage zum nichtflüchtigen Speichern von Identifikations- und/oder Konfigurationsinformationen. Erfindungsgemäß wird die Aufgabe dadurch gelöst, dass mehrere unabhängige und steckbare Datenspeicher in ein gemeinsames Gehäuse integriert werden, wobei die Unabhängigkeit jedes einzelnen Datenspeichers erhalten bleibt. Dabei können mehrere Systemkomponenten gleichzeitig auf jeweils ein exklusiv zugeordnetes Datenspeicherelement des gemeinsam verwendeten steckbaren Datenspeichers zugreifen. Damit ist einerseits der Platzbedarf, der für die elektrisch leitende Kontaktierung mit den Datenspeicherelementen benötigt wird, reduzierbar. Andererseits lassen sind dadurch die Lagerhaltungskosten minimieren, da nur ein einziger gemeinsamer steckbarer Datenspeicher benötigt wird. Im Falle des Austauschs einer Systemkomponente muss daher höchstens ein steckbarer Datenspeicher auf die neue Komponente übertragen werden, wodurch sich der Tauschvorgang vereinfacht und sich die Fehleranfälligkeit beim Tausch und damit einhergehend die Stillstandszeit der Anlage deutlich reduzieren lässt.

Die folgende Bezugszeichenliste wird in die Beschreibung einbezogen und erläutert weitere Merkmale der Erfindung.

### Bezugszeichenliste

- 1: Steckbarer Datenspeicher
- 11: Datenspeicherelement, nichtflüchtig
- 111: Daten des Datenspeicherelements
- 12: Weiteres Datenspeicherelement, nichtflüchtig
- 121: Daten des weiteren Datenspeicherelements
- 13: Schnittstelle des Datenspeicherelements
- 131: Separates Steckverbinder-Element der Schnittstelle des Datenspeicherelements
- 14: Schnittstelle des weiteren Datenspeicherelements
- 141: Separates Steckverbinder-Element der Schnittstelle des weiteren Datenspeicherelements
- 15: Gemeinsames Steckverbinder-Element zwischen Datenspeicher und Systemkomponenten
- 16: Gehäuse des Datenspeichers
- 2: Erste Systemkomponente (z.B. Umrichter)
- 21: Steuerelektronik
- 22: Leistungselektronik
- 23: Weiteres Steckverbinder-Element, zwischen Systemkomponenten
- 3: Weitere Systemkomponente (z.B. Sicherheitssteuerung)
- 31: Erster Mikrocontroller der weiteren Systemkomponente
- 32: Zweiter Mikrocontroller der weiteren Systemkomponente
- M: Elektromotor

## Patentansprüche

1. System aus Datenspeicherelementen und mindestens zwei Systemkomponenten, die für den Betrieb je ein steckbares Datenspeicherelement benötigen,
wobei diese benötigten Datenspeicherelemente (11, 12) in einem gemeinsamen Gehäuse (16) eines steckbaren Datenspeichers (1) zusammengefasst sind,
wobei jede Systemkomponente (2, 3) über eine separate und leitungsgebundene Schnittstelle auf genau ein Datenspeicherelement (11, 12) exklusiv Zugriff hat,
wobei jedes der Datenspeicherelemente (11, 12) eine nichtflüchtige Speicherung von Daten (111) ermöglicht,
wobei die Datenspeicherelemente (11, 12) unabhängig voneinander und physikalisch getrennt ausgeführt sind,
und wobei die Schnittstellen (13, 14) unabhängig voneinander ausgeführt sind,
**dadurch gekennzeichnet, dass**
wenn der steckbare Datenspeicher (1) in nur einer ersten (2) der Systemkomponenten (2, 3) mittels des alle Schnittstellen (13, 14) führenden gemeinsamen Steckverbinder-Elements (15) eingesteckt wird, der Zugriff auf die weiteren Daten (121) der weiteren Datenspeicherelemente (12) durch die weiteren Systemkomponenten (3) durch zusätzliche Steckverbinder-Elemente (23) zwischen den Systemkomponenten ermöglicht wird,
wobei das Datenspeicherelement (11) und die Schnittstelle (13) galvanisch getrennt von den weiteren Datenspeicherelementen (12) und den weiteren Schnittstellen (14) ausgeführt sind,
damit der gemeinsame steckbare Datenspeicher (1) auch beim gleichzeitigen Einstecken mittels separaten Steckverbinderelementen (131, 141) in mehr als eine der
Systemkomponenten (2, 3) mit unterschiedlichen Bezugspotenzialen verwendet werden kann.

2. System nach Anspruch 1,
**dadurch gekennzeichnet, dass**
das Datenspeicherelement (11) und das weitere Datenspeicherelement (12) in unterschiedlichen Technologien und/oder mit unterschiedlichen Zugriffsverfahren ausgeführt sind.

## Claims

1. System composed of data storage elements and at least two system components which, for operation, require one plug-in data storage element each,
said required data storage elements (11, 12) being combined in a shared housing (16) of a plug-in data store (1),
each system component (2, 3) exclusively having access to precisely one data storage element (11, 12) by means of a separate, wired interface,
each of the data storage elements (11, 12) enabling non-volatile storage of data (111),
the data storage elements (11, 12) being configured to be independent of one another and physically separate,
and the interfaces (13, 14) being configured to be independent of one another, **characterised in that**
when the plug-in data store (1) is inserted in only a first (2) of the system components (2, 3) by means of the shared plug connector element (15), which guides all the interfaces (13, 14), the access to the further data (121) of the further data storage elements (12) by the further system components (3) is enabled by additional plug connector elements (23) between the system components,
the data storage element (11) and the interface (13) being configured to be galvanically isolated from the further data storage elements (12) and the further interfaces (14) so that the shared plug-in data store (1) can also be used when simultaneously inserted, by means of separate plug connector elements (131, 141), into more than one of the system components (2, 3) having different reference potentials.

2. System according to claim 1,
**characterised in that**
the data storage element (11) and the further data storage element (12) are configured in different technologies and/or with different access methods.

## Revendications

1. Système constitué d'éléments de mémorisation de données et d'au moins deux composants de système qui nécessitent chacun un élément de mémorisation de données enfichable pour le fonctionnement,
ces éléments de mémorisation de données nécessaires (11, 12) étant regroupés dans un boîtier commun (16) d'une mémoire de données enfichable (1),
chaque composant de système (2, 3) ayant accès de manière exclusive à exactement un élément de mémorisation de données (11, 12) via une interface séparée et câblée, chacun des éléments de mémorisation de données (11, 12) permettant une mémorisation non volatile de données (111),
les éléments de mémorisation de données (11, 12) étant réalisés indépendamment les uns des autres et séparés physiquement,
et les interfaces (13, 14) étant réalisées indépendamment les unes des autres, **caractérisé en ce que**
lorsque la mémoire de données enfichable (1) est enfichée dans un seul premier (2) des composants de système (2, 3) au moyen de l'élément de connecteur enfichable commun (15) menant à toutes les interfaces (13, 14), l'accès aux données supplémentaires (121) des éléments de mémorisation de données supplémentaires (12) est rendu possible par les composants de système supplémentaires (3) au moyen d'éléments de connecteur enfichable supplémentaires (23) entre les composants de système,
l'élément de mémorisation de données (11) et l'interface (13') étant réalisés de manière séparée galvaniquement des éléments de mémorisation de données supplémentaires (12) et des interfaces supplémentaires (14),
de telle sorte que la mémoire de données commune enfichable (1) puisse également être utilisée lors de l'enfichage simultané au moyen d'éléments de connecteur enfichable séparés (131, 141) dans plus d'un des composants de système (2, 3) avec différents potentiels de référence.

2. Système selon la revendication 1,
**caractérisé en ce que**
l'élément de mémorisation de données (11) et l'élément de mémorisation de données supplémentaires (12) sont réalisés dans différentes technologies et/ou avec différents procédés d'accès.
